Europäisches Patentamt

**European Patent Office**

Office européen des brevets

(19)

(11) Publication number: **0 042 274**
A2

# EUROPEAN PATENT APPLICATION

(12)

(21) Application number: **81302639.0**

(22) Date of filing: **15.06.81**

(51) Int. Cl.³: **B 62 M 9/12**

(30) Priority: **17.06.80 JP 84977/80 U**
**24.09.80 JP 136298/80 U**
**24.09.80 JP 136299/80 U**

(43) Date of publication of application: **23.12.81**
**Bulletin 81/51**

(84) Designated Contracting States: **BE DE FR GB IT**

(71) Applicant: **SHIMANO INDUSTRIAL COMPANY LIMITED,**
**77, 3-cho Oimatsu-cho Sakai-shi, Osaka (JP)**

(72) Inventor: **Shimano, Keizo, 81, 3-cho**
**Midorigaoka-Minamimachi, Sakai-shi Osaka (JP)**

(74) Representative: **Szczuka, Jan Tymoteusz et al,**
**Cruikshank & Fairweather 19 Royal Exchange Square,**
**Glasgow G1 3AE Scotland (GB)**

(54) **Front derailleur.**

(57) This invention relates to a front derailleur for a cycle for use in switching a drive chain between different ones of a plurality of front chain wheels by operation of a control wire (W) connected thereto. The derailleur comprises a base member (1) having a mounting means (2, 3) for securing said base member (1) to the seat tube (S) with said base member(1) extending generally horizontally and radially outwardly of said seat tube (S); a pair of first and second link members (10, 11) pivotally connected by first and second pivot shafts (12, 13) respectively, to said base member (1), and a chain shift means (14) pivotally connected to the link members (10, 11) by third and fourth pivot shafts (15, 16). Known such derailleurs are relatively large and generate a considerable air resistance during riding of the cycle.

According to this invention the first, second, third and fourth pivot shafts (12, 13, 15, 16) are disposed so as to extend generally vertically in use of the derailleur, said first and second link members (10, 11) being pivotally connected by the first and second pivot shafts (12, 13) at their forward portions and by the third and fourth pivot shafts (15, 16) at their rearward portions so as to extend generally horizontally and longitudinally of the cycle in use of said derailleur.

ACTORUM AG

# FRONT DERAILLEUR

This invention relates to a front derailleur mountable on the seat tube of a cycle for switching the drive chain thereof to a desired one of a plurality of front chain wheels upon operation thereof through a control wire.

In particular the present invention relates to a front derailleur for mounting on the seat tube of a cycle for use in switching a drive chain between different ones of a plurality of front chain wheels by operation of a control wire connected thereto in use of the derailleur, said derailleur comprising a base member having a mounting means formed and arranged for securing said base member to said seat tube with said base member extending generally horizontally and radially outwardly of said seat tube in use of said derailleur; a pair of first and second link members pivotally connected by first and second pivot shafts respectively to said base member, and a chain shift means pivotally connected to the link members by third and fourth pivot shafts.

Such front derailleurs that have been previously proposed have the link members disposed substantially vertically, pivoting at their upper ends on horizontal shafts through which they are connected to the base member, and pivotally supporting at their lower ends the chain guide through further horizontal pivot shafts, the link members pivoting around the horizontal pivot shafts mounted on the base member to move the chain shift means axially of the chain gears.

When such a front derailleur is mounted on the seat tube of a cycle, the link members extend substantially vertically alongside the seat tube, so that they present a relatively large area in a transverse vertical plane of the cycle thereby resulting in a relatively large air resistance against the link members during running of the cycle.

In order to reduce the air resistance, it is possible to reduce the projected area by use of a smaller cross-sectional area of each link member. Since, however, the link members are subjected to a relatively large force during chain switching, the possible reduction of cross-sectional area is strictly limited due to the need to maintain adequate structural strength.

Also, with a conventional front derailleur having vertically extending link members, the drive chain, when it is switched from a smaller diameter chain wheel to a larger diameter one, is pressed against the adjacent lateral side of the larger chain wheel because the chain shift means moves in an arc around the horizontal shafts extending axially of the chain wheels. Because of this there is prevented a smooth switching of the chain and further problems such as noise and increased wear may also occur.

The vertical arrangement of the link members along the seat tube also results in an increased separation between the base member and the chain guide, so that the front derailleur as a whole is relatively large and heavy.

It is an object of the present invention to overcome or minimize one or more of the above disadvantages.

The present invention provides a front derailleur for mounting on the seat tube of a cycle for use in switching a drive chain between different ones of a plurality of front chain wheels by operation of a control wire connected thereto in use of the derailleur, said derailleur comprising a base member having a mounting means formed and arranged for securing said base member to said seat tube with said base member extending generally horizontally and radially outwardly of said seat tube in use of said derailleur; a pair of first and second link members pivotally connected by first and second pivot shafts respectively, to said base member, and a chain shift means pivotally connected to the link members by third and fourth pivot shafts characterized in that said first, second, third and fourth pivot shafts are disposed so as to extend generally vertically in use of the derailleur, said first and second link members being pivotally connected by the first and second pivot shafts at their forward portions and by the third and fourth pivot shafts at their rearward portions so as to extend generally horizontally and longitudinally of the cycle in use of said derailleur.

In a derailleur of the invention with the link members extending generally horizontally it will be appreciated that their area, as projected in a vertical transverse plane of the cycle, is considerably reduced in comparison with that of conventional ones without the need for any reduction in their cross-sectional area and thus their strength. Accordingly the air resistance against them during running of the cycle is significantly reduced thereby reducing the drive effort required of the cyclist to propel the cycle.

In addition, when the drive chain is switched from a smaller diameter chain wheel to a larger diameter one, the chain shift means can be moved in the chain shifting direction to reach a position corresponding to engagement of the drive chain with the larger diameter chain wheel, thereby switching the drive chain more smoothly.

Also with the link members extending horizontally the distance between the chain shift means and the base member can be significantly reduced thereby reducing the overall size and weight of the front derailleur.

Further preferred features and advantages of the invention will appear from the following detailed description given by way of example of various embodiments of the invention illustrated with reference to the accompanying drawings, in which:

Fig. 1 is a side view of a first front derailleur of the invention;

Fig. 2 is a plan view of the derailleur of Fig.1;

Fig. 3 is a rear view of the derailleur of Fig.1;

Fig. 4 is an exploded perspective view of some of the principal parts of the derailleur of Fig.1;

Fig. 5 is a side view of a second front derailleur of the invention;

Fig. 6 is a plan view of the derailleur of Fig.5;

Fig. 7 is a rear view thereof;

Fig. 8 is a partial longitudinal vertical cross section taken on the line VIII-VIII in Fig. 7 and showing the control wire guide on an enlarged scale;

Figs. 9 and 10 are detail cross sectional views of alternative forms of wire guide, corresponding to Fig.8;

Fig. 11 is a front view of a second linkage member alone, of a front derailleur of the invention;

Fig. 12 is a plan view thereof;

Fig. 13 is a partial view corresponding to Fig.6 with various parts omitted for the purposes of illustrating the guiding of the control wire and securing of its free end;

Fig. 14 is a cross sectional view of the principal control wire retaining portion of Fig.13;

Figs. 15 and 16 show alternative control wire retaining means;  and

Fig. 17 is a cross sectional view of the principal portion of the retaining means of Fig. 16 on an enlarged scale.

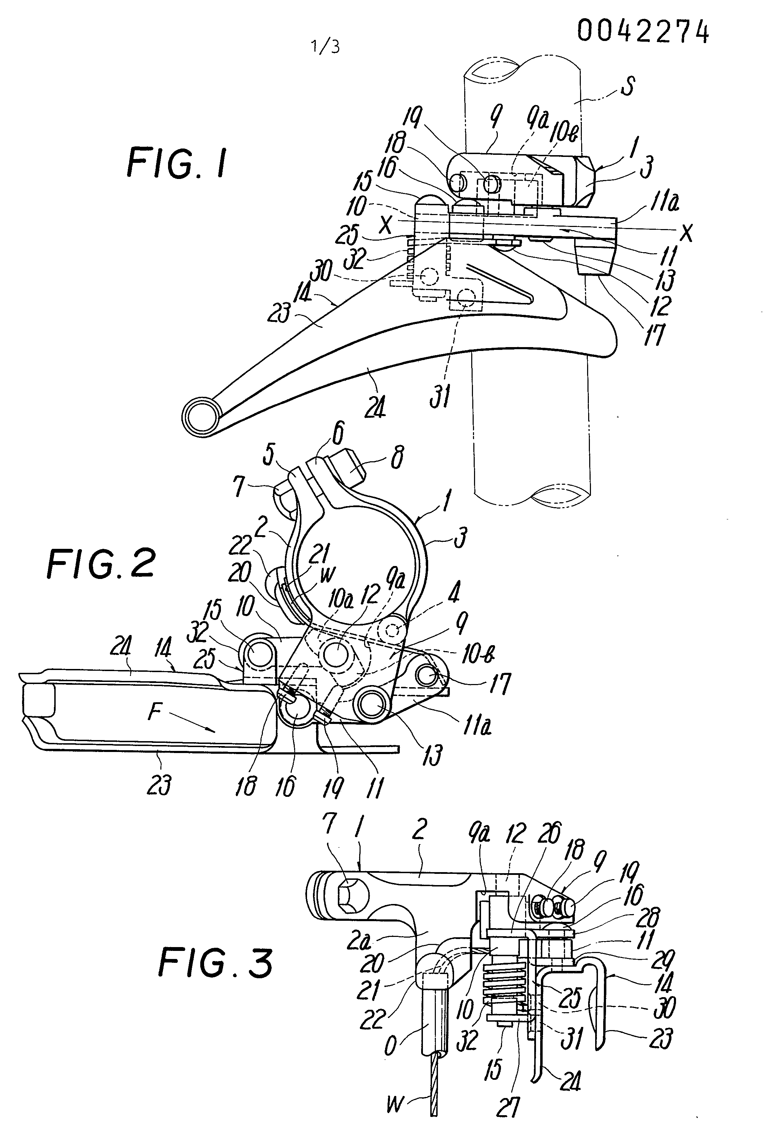

Fig. 1 shows a front derailleur of the invention mounted on a seat tube S of a cycle by means of a base member 1 having a mounting means of the clamping ring or band type. In more detail, as shown in Fig. 2, the mounting means comprises a pair of approximately semi-circular bands 2 and 3 which are pivotally inter-connected at one end thereof via a pivot pin 4 and are provided at their free ends with noses 5 and 6. The noses 5 and 6 are held together by a nut 8 and bolt 7, to clamp the bands 2 and 3 tightly around the seat tube S and mount the base member 1 thereon.

The base member 1 has a body portion 9 extending from one said semi-circular band 2, substantially radially outwardly and horizontally with respect to the seat tube S.

A pair of, first and second, link members 10 and 11 are disposed below the body portion 9 and extend horizontally and longitudinally of the cycle alongside the seat tube S. The link members 10 and 11 are pivotally connected at their front ends to the body portion 9 through first and second pivot shafts 12 and 13 disposed with their longitudinal axes substantially vertical. The rear ends of the link members 10, 11 are pivotally connected, via third and fourth pivot shafts 15 and 16 also disposed with their longitudinal axes substantially vertical, to a chain shift means 14.

When the base member 1 is mounted on the seat tube S, the central longitudinal axes of the respective link members 10 and 11 extend substantially horizontally as shown in Fig. 1. As a result, the area of the link members 10 and 11 presented with respect to the forward direction of travel of the bicycle, to the air through which the bicycle is ridden i.e. that projected in a transverse vertical plane of the bicycle, is smaller than that of conventional, vertically arranged, link members.

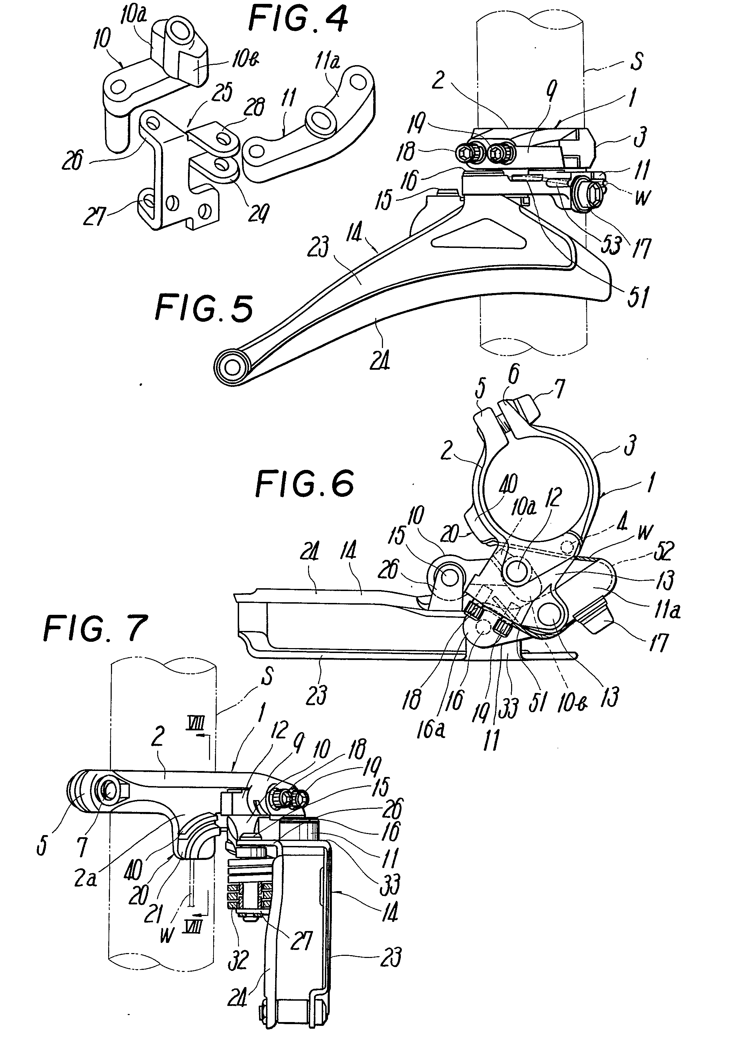

The first and second link members 10 and 11 are, as shown in Fig. 2, disposed substantially parallel to each other in inner and outer positions, respectively, relative to the seat tube S. The first, inner, link member 10 is provided at the front end with stop means 10a and 10b as shown in Fig. 4. The second, outer, link member 11 is provided at its front end with an arm 11a extending forwardly of a bore through which the second pivot shaft 13 extends, as shown in Fig. 4, the arm 11a carrying a fixing means 17 (see Figs. 1 and 2) for retaining a control wire W.

The body portion 9 has, on its underside in proximity to the first pivot shaft 12, a recess 9a for receiving therein and engaging on one side, the stop means 10a and 10b of the first link member 10 and, at an outer surface, two adjustment means 18 and 19 for engaging the opposite sides of the stop means 10a and 10b at end limit positions of the swinging range of movement of the first link member 10, the adjustment screws 18 and 19 thereby controlling the range of swinging movement of the first link member 10.

The semicircular band 2 from which the body portion 9 extends is, as shown in Fig. 3, provided with a downwardly extending guide portion 2a having a wire guide 20 with a guide groove 21 for receiving therein and guiding a control wire W towards the fixing means 17.

The guide groove 21, is as shown in Figs. 2 and 3, open upwardly and provided at its lower end with a stop 22 for engaging an outer sheath O for the control wire W of a Bowden type control cable.

The control wire W extends from a control lever (not shown), through the outer sheath O, and then through the guide groove 21 of the wire guide 20 to the fixing means 17, to which it is secured. When the wire W is pulled, it forcibly swings the link members 10 and 11 against the force of a return spring (to be described below), and when it is released, it returns to its original position under the influence of said return spring.

The chain shift means 14 has a pair of opposed guide plates 23 and 24 and is supported on the link members 10 and 11 via a mounting member 25. The shift means mounting member 25 is, as shown in Fig. 4, provided with a pair of mounting noses 26 and 27 projecting inwardly towards the seat tube S and a pair of mounting noses 28 and 29 projecting outwardly with respect to said seat tube S, the mounting noses 26, 27, 28 and 29 each having a respective shaft bore. The bores 26-29 are arranged so that the rear end of the first link member 10 locates between the noses 26 and 27, and the rear end of the second link member 11 locates between the noses 28 and 29 with the third and fourth pivot shafts 15 and 16 extending through said nose bores 26, 27 and 28, 29 respectively and through the respective pivot shaft mounting bores in the rear ends of said first and second link members. The chain shift means 14 is fixed to said mounting member 25 by pins 30 and 31.

A return spring 32 is disposed for acting between the chain shift means 14 and the first link member 10 so as to maintain the chain shift means 14 in a position corresponding to engagement of the drive chain with the smaller diameter chain wheel, i.e., in a so-called low or normal speed condition, from which the chain shift means 14 is movable in the direction of the arrow F in Fig. 2 to switch the chain from the smaller diameter chain wheel to the larger diameter one.

When the above-described front derailleur is mounted on the seat tube S, the link members 10 and 11 extend substantially horizontally and longitudinally of the cycle alongside said seat tube S. The smaller area thus presented by the link members 10 and 11 with respect to the forward direction of travel of the cycle results in a significantly reduced air resistance against link members 10 and 11 and base member 1.

When the drive chain is to be switched from the smaller diameter chain wheel to the larger diameter one, the control lever is operated to pull the control wire W to swing the second link member 11 together with the first link member 10 counterclockwise (as viewed in Fig.2) so that the chain shift means is moved generally in the direction of the forward chain movement though slightly obliquely thereof as indicated by the arrow F in Fig.2 into a position corresponding to engagement of the drive chain with the larger diameter chain wheel. Consequently the drive chain is not forcibly pressed against the inner side of the larger diameter gear wheel opposite the seat tube and thus engages the teeth of said larger diameter chain wheel more smoothly.

When the chain is to be returned to the smaller diameter chain wheel the control wire W is released or switched back so that the return spring 32 acts to return the chain shift means 14 to the position corresponding drive chain engagement with the smaller diameter chain wheel. In this case, the drive chain is also switched smoothly to the smaller diameter chain wheel.

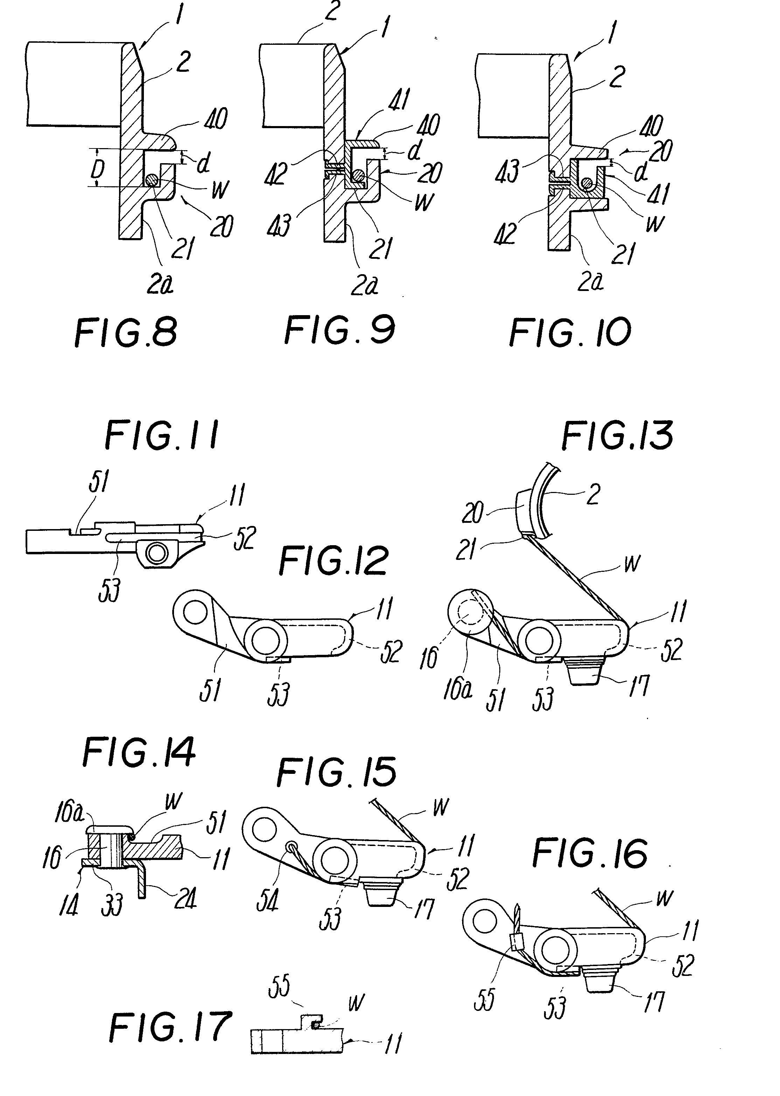

It will of course be appreciated that it is not essential to employ a Bowden type cable with an outer sheath O as described above. Where no outer sheath O is in fact used, the control wire W can be pulled against the force of the return spring 32 or released so that the link members 10 and 11 reciprocably swing the chain shift means 14 axially of the chain wheels to switch the drive chain between the chain wheels for engagement with a desired one thereof. In this case, the wire W, when it is released, tends however to jump outwardly with respect to the guide groove 21 and possibly escape therefrom. A possible remedy for this problem is to use a relatively deep guide groove 21, as shown in Figs. 5 to 7 of a second derailleur, said groove 21 having a depth $D$ (see Fig. 8) in the direction of jumping of the released wire $W$ sufficient to accommodate the jumping height of the wire $W$, and a barrier wall 40 is provided opposite the open side of the guide groove 21, i.e., in the path of an outwardly jumping movement of the control wire $W$ and covering the groove 21, the barrier wall 40 being spaced from the upper edge of the wire guide 20 at one side at a separation $d$ therefrom smaller than the diameter of the wire $W$ to define an opening therebetween substantially perpendicularly to the jumping direction of the wire $W$. The above referred to jumping direction and jumping height or range of jumping of the wire $W$ mean the direction and range of jumping of the wire $W$ when this is loosened or released following operation of the control lever in a return direction with the wire $W$ being pulled by the action of the return spring.

With the above type of wire guide 20, the wire $W$ is safely retained within the guide groove 21, even when jumping without however being hindered in its free movement under the influence of the control lever. Even when it is subject to substantial jumping, the barrier wall 40 prevents escape of the control wire $W$ from the guide groove 21.

In the above referred to second embodiment of Figs. 5 to 7 the barrier wall 30 is formed integrally with the base member 1 as shown in Fig. 8.

The barrier wall 40 may alternatively be separately formed as an insert 41 made from a synthetic resin material as shown in Fig. 9, the insert 41 being inserted in the guide groove 21. In this case, the insert 41 is generally U-shaped in cross section with a shorter limb nesting on the bottom of the guide groove 21 and a longer limb covering over the open side of the groove 21 so as to accommodate the wire W for a smooth reciprocating movement therein. Such an insert 41 of synthetic resin the same as in Fig. 9 could also be disposed inside the guide groove 21 shown, it being only necessary to provide engagement means 43 for engagement of anchor means 42 of the insert 41 (further described hereinbelow). As a further alternative there could be used such an insert 41 with a slightly different generally U-shaped cross-sectional shape such that the insert provides the sides and bottom of the guide groove 21 whilst a cover 40 therefor is formed integrally with the base member 1.

The above inserts 41 are provided with an anchor means in the form of a projection 42 having a slit, and the base member 1 has engagement means in the form of a stepped through bore 43 for accommodating therein the projection 42 so as to secure the insert 41 to the base member 1.

If, in the above described embodiment, a free end portion of the wire W secured by the fixing means 17 were to project out from the second link member 11 this would be rather dangerous for the rider. This danger can however be avoided by the provision of a retaining means which retains the free end close to the second link member 11 out of harms way. A suitable retaining means is shown in Fig. 6 and comprises a wire receiving groove 51 formed on the upper surface of the second linkage member 11 and extending in a generally inward direction (relative to the seat tube S) from the outer side thereof - see also Figs. 11 and 12. The retaining means of Fig. 6 also comprises, as shown in Figs. 11 and 12, a first wire guide groove 52 and a second wire guide groove 53, the first wire guide groove 52 guiding wire W towards the fixing means 17, the second wire guide groove 53 guiding the projecting free end portion of the wire W projecting beyond the fixing means 17 towards the wire receiving groove 51, so that the wire W is guided at its end portion into wire receiving groove 51 and held against a side wall thereof by the inherent resilience of the wire W.

It is preferred that the wire receiving groove 51 extends, as shown in Fig. 13, toward the fourth pivot shaft 16 which pivotally supports the chain shift means 14, said fourth pivot shaft 16 having a head 16a which partially overlaps the wire receiving groove 51, and the free end of wire W retained to the wall of wire groove 51 being inserted below said head 16a, so that upward movement of the free end portion of the wire W and hence possible escape thereof from the wire-receiving groove is substantially prevented.

In the above described construction, the free end portion of the wire W secured by the fixing means 17 is bent at the end of the second wire guide groove 53 remote from the fixing means 17 so that a resilient return biasing force is imparted to the wire therebeyond, the portion of the wire therebeyond being guided along inside the wire receiving groove 51 and retained against the side wall of groove 51 on the outside of the bent portion by said return force and also retained by the pivot shaft head 16a. The free end of the wire W is thus positively retained against and by the second link member 11 being led from the outer side thereof to the inner side thereof thereby avoiding unintentional escape or external projection therefrom during use of the front derailleur.

In addition, the second embodiment of Figs. 5 to 7, instead of using a mounting member 25 to support the chain shift means, uses mounting noses 26 and 27 provided on the first link member 10 being disposed between said mounting noses 26 and 27 and supported by the third pivot shaft 15 extending through respective bores therein, a connector 33 bridging the chain shift plates 23 and 24 and being supported on the second link member 11 by the fourth pivot shaft 16.

Alternatively, the retaining means could comprise a through bore 54 in the second link member 11 as shown in Fig. 15, or a projection 55 on said second link member 11 in the form of an inverted L-shape defining a wire receiving groove between part of said projection and an opposed part of the second link member 11 as shown in Figs. 16 and 17. The projection 55 may be moulded or cast integrally with the second link member 11 or machined and/or stamped out of the main metal body plate of the second link member 11.

## CLAIMS

1. A front derailleur for mounting on the seat/tube (S) of a cycle for use in switching a drive chain between different ones of a plurality of front chain wheels by operation of a control wire (W) connected thereto in use of the derailleur, said derailleur comprising a base member (1) having a mounting means (2,3) formed and arranged for securing said base member (1) to said seat tube (S) with said base member (1) extending generally horizontally and radially outwardly of said seat tube (S) in use of said derailleur; a pair of first and second link members (10, 11) pivotally connected by first and second pivot shafts (12,13) respectively, to said base member (1), and a chain shift means (14) pivotally connected to the link members (10,11) by third and fourth pivot shafts (15,16) characterized in that said first, second, third and fourth pivot shafts (12,13, 15,16) are disposed so as to extend generally vertically in use of the derailleur, said first and second link members (10,11) being pivotally connected by the first and second pivot shafts (12,13) at their forward portions and by the third and fourth pivot shafts (15,16) at their rearward portions so as to extend generally horizontally and longitudinally of the cycle in use of said derailleur.

2. A derailleur according to Claim 1 wherein one of said link members (10,11) has an arm (11a) extending forwardly of the second pivot shaft pivotal connection, which arm is provided with a control wire fixing means (17).

3. A derailleur according to Claim 2, wherein said base member (1) is provided with a wire guide (20) having a guide groove (21) through which groove said control wire (W) is guided towards the control wire fixing means (17) in use of the derailleur.

4.   A derailleur according to Claim 3, wherein is provided a barrier wall (40) above the open top of said guide groove (21) for substantially preventing escape of said wire ($\underline{W}$) from said guide groove (21), said barrier wall being spaced from an opposed rim of said guide groove (21) by a separation (d) not substantially larger than the diameter of the control wire ($\underline{W}$).

5.   A derailleur according to Claim 2, wherein said link member (10,11) carrying said control wire fixing means (17) is provided with a retaining means (51) for retaining a free end of said control wire ($\underline{W}$) secured to said fixing means (17).

6.   A derailleur according to Claim 5, wherein said retaining means (51) comprises a wire receiving groove formed in the upper surface of said link member (11) and extending in a generally inward direction, relative to mounting means (2,3) from the outer side of said link member (11).

7.   A derailleur according to Claim 6, wherein said wire receiving groove (51) extends towards said fourth pivot (16) shaft pivotally supporting said link member (11), said fourth pivot shaft (16) having an increased diameter (16$\underline{a}$) head which partially overlaps said wire receiving groove (51), the free end of the control wire ($\underline{W}$) retained by said wire receiving groove (51) extending underneath said head (16$\underline{a}$) of said fourth pivot shaft (16) whereby upward movement of the control wire ($\underline{W}$) from said wire receiving groove (51) is restricted.

8.   A derailleur according to Claim 5, wherein said retaining means comprises a through bore (54) formed in said link member (11).

9.   A front derailleur for a cycle according to Claim 5, wherein said retaining means comprises a projection (55) in the form of an inverted L-shape defining a wire receiving groove between part of said projection (55) and an opposed part of the link member (11).

10. A front derailleur according to any one of the preceding claims when secured to the seat tube (S) of a said cycle.

0042274

FIG. 1

FIG. 2

FIG. 3

FIG.4

FIG.5

FIG.6

FIG.7

0042274

FIG.8

FIG.9

FIG.10

FIG.11

FIG.12

FIG.13

FIG.14

FIG.15

FIG.16

FIG.17